# EUROPEAN PATENT APPLICATION

(11) **EP 4 421 298 A1**
(43) Date of publication of application: **28.08.2024**
(21) Application number: 24158593.4
(22) Date of filing: 20.02.2024
(51) Int. Cl.: F01N 11/00

(54) **SYSTEM AND METHOD FOR CONTROLLING DATA COMMUNICATION WITH A VEHICLE BASED ON A CHARACTERISTIC OF THE EXHAUST GAS FROM THE VEHICLE**

(30) Priority: 23.02.2023 US 202363486498 P
(71) Applicant: TuSimple, Inc., San Diego, CA 92122 (US)
(72) Inventor: Nelson, Donald Gene, Fort Worth (US); Cannon, Riley Joseph, Dallas (US); Siegler, Erik Andrew, San Diego (US); Johnson-Faulkner, Micah Seth, Mansfield (US); McCarthy, JR., Gary Lee, Flower Mound (US)
(74) Representative: Hamer, Thomas Daniel

(57) **Abstract**

A system, method and computer program product control data communication based on a characteristic of an exhaust gas from a vehicle. In the context of a system, an exhaust snorkel is in fluid communication with an exhaust system of the vehicle and configured to direct the exhaust gas from the vehicle to a ventilation system. The system also includes a data transmission system configured to provide for data communication between the vehicle and an offboard computer system. The system further includes a sensor system configured to control operation of the data transmission system based on the characteristic of the exhaust gas.

## Description

### CROSS-REFERENCE TO RELATED APPLICATION

The present application claims priority to U.S. Provisional Patent Application No. 63/486,498, filed February 23, 2023, the contents of which are incorporated herein by reference in their entirety.

### TECHNOLOGICAL FIELD

An example embodiment relates generally to a system and method for directing exhaust gas from a vehicle to a ventilation system, while concurrently controlling data communication between the vehicle and an offboard computer system.

### BACKGROUND

A vehicle may sometimes need to be on with the engine running while parked within a building. For example, during some types of maintenance operations, a vehicle that is parked within a building, such as a bay of the building, may need to be running in order to perform the maintenance operations. With the advent of autonomous vehicles including autonomous trucks, autonomous vehicles may need to download data from the vehicle, such as from an onboard computer or memory device carried by the vehicle, to an offboard computer system, such as for subsequent analysis, storage or the like. Similarly, data may sometimes need to be uploaded from an offboard computer system to the vehicle, such as a computer or memory device carried by the vehicle, such as in an instance in which the software that governs the operation of the onboard computer carried by the vehicle and, in some instances, the operation of the vehicle itself is updated or otherwise changed. In this regard, an autonomous vehicle, such as an autonomous truck, may be parked within a building, such as a bay of a building, and may be required to be running in order to upload or download the data.

Vehicles that are on with the engine running produce an exhaust gas. In an instance in which a vehicle parked within a building is running, the exhaust gas may accumulate and be malodorous and, in some situations, may exceed the level considered appropriate for prolonged exposure. As such, many buildings have ventilation systems to allow the exhaust gas to be vented to the environment.

While ventilation systems are helpful, ventilation systems may not always be sufficient to maintain the level of the exhaust gas within the building at an acceptable level. For example, the ventilation system may not be pulling a sufficient vacuum in order to reduce the level of the exhaust gas to an acceptable level, or the ventilation system may have a leak or obstruction that prevents the ventilation system from reducing the exhaust gas to an acceptable level. Still further, the ventilation system may not intake all of the exhaust gas and, instead, some exhaust gas may disadvantageously pool in various locations within the building.

### SUMMARY

A system and method are therefore provided in order to direct exhaust gas from a vehicle to a ventilation system, while concurrently providing for data communication between the vehicle and an offboard computer system. In order to increase the likelihood that the ventilation system is reducing the concentration of the exhaust gas to an acceptable level, the system and method of an example embodiment are configured to condition the data communication between the vehicle and the offboard computer system upon a characteristic of the exhaust gas, such as by requiring that the level of a particular chemical within the exhaust gas be maintained within an acceptable range. As such, in an instance in which the data communication between the vehicle and the offboard computer system is discontinued by the system and method of this example embodiment, steps may be taken to improve the performance of the ventilation system and to reduce the level of the particular chemical within the exhaust gas, thereby improving the conditions within the building. In some example embodiments, the system may utilize one or more wires for data communication between the vehicle and the offboard computer system with the one or more wires being carried by at least a portion of an exhaust snorkel that is configured to direct the exhaust gas from the vehicle to the ventilation system. Thus, the system of this example embodiment supports the one or more wires in a manner that reduces the likelihood that the one or more wires will be damaged by the vehicles or the personnel within the building.

In an example embodiment, a system is provided for controlling data communication based on a characteristic of an exhaust gas from a vehicle. The system includes an exhaust snorkel in fluid communication with an exhaust system of the vehicle and configured to direct the exhaust gas from the vehicle to a ventilation system. The system also includes a data transmission system configured to provide for data communication between the vehicle and an offboard computer system. The system further includes a sensor system configured to control operation of the data transmission system based on the characteristic of the exhaust gas.

The sensor system of an example embodiment includes one or more sensors configured to measure the characteristic of the exhaust gas. The sensor system of this example embodiment also includes a control system configured to control operation of the data transmission system based on the characteristic of the exhaust gas as measured by the one or more sensors. In an example embodiment, the one or more sensors are configured to measure a level of a particular chemical in the exhaust gas with the control system being configured to discontinue the data communication between the vehicle and the offboard computer system in an instance in which the level of the particular chemical satisfies a predefined threshold. In an example embodiment, the system also includes a connector configured to connect the exhaust snorkel to the exhaust system of the vehicle. In this example embodiment, the system may also include a connection sensor configured to detect a connection of the exhaust snorkel to the exhaust system of the vehicle with the control system being further configured to control the operation of the data transmission system based on the connection of the exhaust snorkel to the exhaust system of the vehicle.

The data transmission system of an example embodiment includes one or more wires extending through at least a portion of an interior of the exhaust snorkel in order to transmit data between the vehicle and the offboard computer system. In another example embodiment, the data transmission system includes one or more wires carried along an exterior surface of at least a portion of the exhaust snorkel in order to transmit data between the vehicle and the offboard computer system. In a further example embodiment, the data transmission system is configured to provide wireless communication between the vehicle and the offboard computer system.

In another example embodiment, a method is provided for controlling data communication based on a characteristic of an exhaust gas from a vehicle. The method includes directing the exhaust gas from the vehicle to a ventilation system via an exhaust snorkel that is in fluid communication with an exhaust system of the vehicle. With a data transmission system the method also includes providing for data communication between the vehicle and an offboard computer system. The method further includes controlling operation of the data transmission system based on the characteristic of the exhaust gas.

Controlling the operation of the data transmission system in accordance with an example embodiment includes measuring the characteristic of the exhaust gas with one or more sensors and controlling operation of the data transmission system based on the characteristic of the exhaust gas that is measured by the one or more sensors. In this example embodiment, measuring the characteristic of the exhaust gas may include measuring a level of a particular chemical in the exhaust gas and controlling the operation of the data transmission system may include discontinuing the data communication between the vehicle and the offboard computer system in an instance in which the level of a particular chemical satisfies the predefined threshold. The method of an example embodiment also includes connecting the exhaust snorkel to the exhaust system of the vehicle with a connector. In this example embodiment, the method may also include detecting the connection of the exhaust snorkel to the exhaust system of the vehicle and controlling operation of the data transmission system based on the connection of the exhaust snorkel to the exhaust system of the vehicle.

The method of an example embodiment provides for data communication via one or more wires extending through at least a portion of an interior of the exhaust snorkel in order to transmit data between the vehicle and the offboard computer system. In another example embodiment, the method provides for data communication via one or more wires carried along an exterior surface of at least a portion of the exhaust snorkel in order to transmit data between the vehicle and the offboard computer system. In a further example embodiment, the method provides for data communication by providing for wireless communication between the vehicle and the offboard computer system.

In another example embodiment, a computer program product is provided for controlling data communication based on a characteristic of an exhaust gas that is directed from to a ventilation system via an exhaust snorkel that is in fluid communication with an exhaust system of the vehicle. The computer program product includes at least one computer-readable storage medium having computer-executable program code instructions stored therein with the computer-executable program code instructions including program code instructions configured to provide for data communication with a data transmission system between the vehicle and an offboard computer system. The computer-executable program code instructions also include program code instructions configured to control operation of the data transmission system based on the characteristic of the exhaust gas.

The program code instructions configured to control the operation of the data transmission system include, in one example embodiment, program code instructions configured to measure the characteristic of the exhaust gas with one or more sensors and to control operation of the data transmission system based on the characteristic of the exhaust gas as measured by the one or more sensors. In this example embodiment, the program code instructions configured to measure the characteristic of the exhaust gas may include program code instructions configured to measure a level of a particular chemical in the exhaust gas, and the program code instructions configured to control operation of the data transmission system may include program code instructions configured to discontinue the data communication between the vehicle and the offboard computer system in an instance in which the level of the particular chemical satisfies a predefined threshold.

The computer-executable program code instructions of an example embodiment further include program code instructions configured to detect a connection of the exhaust snorkel to the exhaust system of the vehicle. In this example embodiment, the program code instructions configured to control operation of the data transmission system include program code instructions configured to control the operation of the data transmission system based on the connection of the exhaust snorkel to the exhaust system of the vehicle. The program code instructions of an example embodiment that are configured to provide for data communication include program code instructions configured to provide for data communication via one or more wires extending through at least a portion of an interior of the exhaust snorkel in order to transmit data between the vehicle and the offboard computer system. In an example embodiment, the program code instructions configured to provide for data communication include program code instructions configured to provide for data communication via one or more wires carried along an exterior surface of at least a portion of the exhaust snorkel in order to transmit data between the vehicle and the offboard computer system. The program code instructions of an example embodiment that are configured to provide for data communication include program code instructions configured to provide for wireless communication between the vehicle and the offboard computer system.

In a further example embodiment, a system is provided that includes an exhaust snorkel in fluid communication with an exhaust system of the vehicle. The exhaust snorkel is configured to direct the exhaust gas from the vehicle to a ventilation system. The system also includes one or more wires carried by at least a portion of the exhaust snorkel in order to transmit data between the vehicle and an offboard computer system.

The one or more wires of an example, embodiment extend through at least a portion of an interior of the exhaust snorkel in order to transmit data between the vehicle and the offboard computer system. In this example embodiment, the system may also include a junction housing carried by the exhaust snorkel as well as one or more external wires configured to facilitate transmission of data between the vehicle and the offboard computer system. The one or more external wires are communicably connected at the junction housing to the one or more wires that extend through at least a portion of the interior of the exhaust snorkel. In another example embodiment, the one or more wires are carried along an exterior surface of at least a portion of the exhaust snorkel in order to transmit data between the vehicle and the offboard computer system.

The system of an example embodiment also includes a sensor system configured to control data transmission via the one or more wires based on a characteristic of the exhaust gas. The sensor system of an example embodiment includes one or more sensors configured to measure the characteristic of the exhaust gas and a control system configured to control data transmission via the one or more wires based on the characteristic of the exhaust gas is measured by the one or more sensors. In an example embodiment, the one or more sensors are configured to measure a level of a particular chemical in the exhaust gas. In this example embodiment, the control system is configured to discontinue the data transmission between the vehicle and the offboard computer system in an instance in which the level the particular chemical satisfies a predefined threshold.

The system of an example embodiment also includes a connector configured to connect the exhaust snorkel to the exhaust system of the vehicle. In this example embodiment, this system may also include a connection sensor configured to detect a connection of the exhaust snorkel to the exhaust system of the vehicle, and a control system configured to control data transmission via the one or more wires based on the connection of the exhaust snorkel to the exhaust system of the vehicle.

### BRIEF DESCRIPTION OF THE DRAWINGS

For a more complete understanding of this disclosure, reference is now made to the following brief description, taken in connection with the accompanying drawings and detailed description, wherein like referenced numerals represent like parts.
Figure 1 is a fragmentary perspective view of a portion of an interior of a building having a plurality of bays in which vehicles may be parked with the building including a system in accordance with an example embodiment;
Figure 2 is a block diagram of an autonomous tractor or vehicle;
Figure 3 is a block diagram of a system configured in accordance with an example embodiment;
Figure 4 illustrates a portion of an exhaust snorkel having a cable including one or more wires extending through a portion of the interior of the exhaust snorkel in accordance with an example embodiment;
Figure 5 illustrates an exhaust snorkel that carries a cable including one or more wires along at least a portion of the exterior surface of the exhaust snorkel in accordance with another example embodiment;
Figure 6 is a side view of a connector configured to connect an exhaust snorkel to an exhaust system of a vehicle in accordance with an example embodiment; and
Figure 7 is a flow chart illustrating operations performed by a method for controlling data communication based on a characteristic of an exhaust gas from a vehicle in accordance with an example embodiment.

### DETAILED DESCRIPTION OF THE FIGURES

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout.

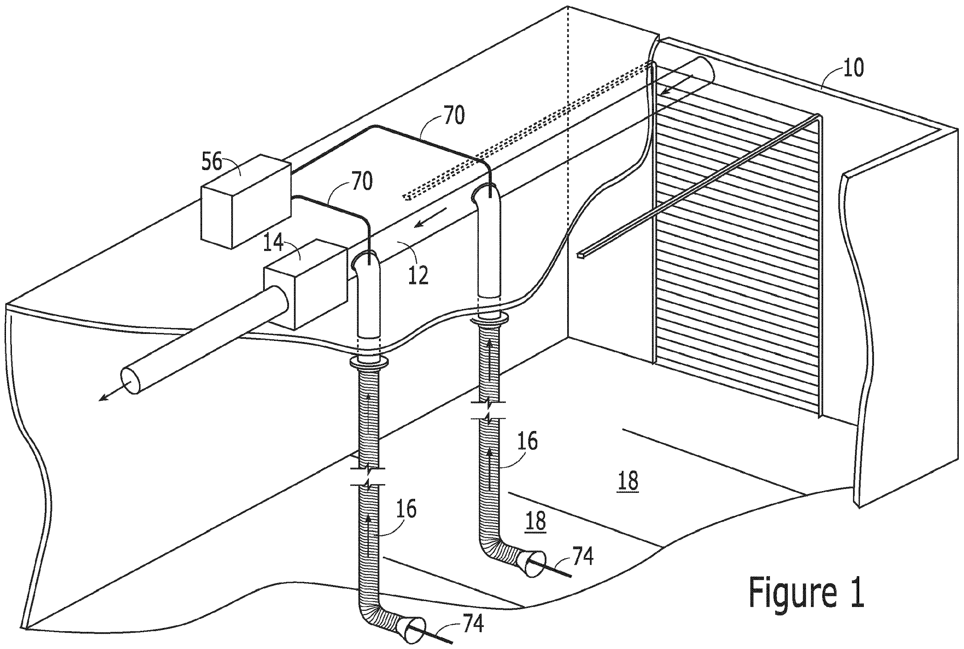

A system and method are provided in accordance with an example embodiment in order to direct exhaust gas from the vehicle to a ventilation system while concurrently providing for data communication between the vehicle and an offboard computer system. In this regard and as shown in Figure 1, various buildings 10, such as garages, maintenances depots. repair shops and the like, are configured to temporarily house vehicles undergoing various types of service. In the course of performing maintenance, repairs or other types of service in conjunction with the vehicles within the building, the vehicles may be required to be on and the engine running. As such, the vehicles may emit exhaust gas into the building while service is performed on the vehicle.

In order to remove at least a portion of the exhaust gas from the building 10 such that personnel can continue to work within the building in a safe manner, a ventilation system 12 may be provided. The ventilation system may include a vacuum 14 or other type of fan or pump for drawing air, including exhaust gas emitted by the vehicles, from within the building and directing the air including the exhaust gas out of the building. In this regard, the ventilation system may also include duct(s) in fluid communication with the vacuum or other pump in order to direct the air including the exhaust gas that is drawn from within the building out of the building and into the external environment. By being in fluid communication with the vacuum or other pump, fluids, such as the exhaust gas that enters the duct(s), such as by being drawn into the duct(s) as a result of the suction or other reduction in pressure provided by the vacuum or other pump, flows through the duct(s) to the vacuum or other pump and/or to another location defined by the duct(s) to which the fluid is discharged.

In order to capture a greater percentage of the exhaust gas generated by a vehicle within the building and to more efficiently direct the exhaust gas to the ventilation system, a system in accordance with an example embodiment includes an exhaust snorkel 16. Although the exhaust snorkel may be configured in various manners, the exhaust snorkel of one embodiment is a flexible tube, such as a flexible duct or hose, that is in fluid communication with the ventilation system 12 at one end and is fluid communication with the exhaust system of a vehicle at the other end. As explained below, the exhaust snorkel may be configured to be connected to the exhaust system of the vehicle such that the exhaust gas produced by the vehicle flows through the exhaust snorkel in the direction of the arrows shown in Figure 1 to the ventilation system in order to then be expelled from the building 10. In other words, the exhaust snorkel is configured to the direct the exhaust gas from the vehicle to the ventilation system.

With respect to the enhanced safety provided by the system and method of an example embodiment, vehicles, including autonomous vehicles, must be parked within a building during maintenance operations and/or while downloading data therefrom. For example, during the nighttime hours as well as in instances in which the temperatures are cold or the weather is otherwise inclement, vehicles may be moved into a building during the maintenance operations and/or the downloading of data. As the vehicles must oftentimes be running and, as a result, generating exhaust fumes during the performance of maintenance operations and/or the downloading of data, the system and method of an example embodiment remove at least some of the exhaust fumes from the building, thereby improving the air quality within the building and permitting personnel to work within the building without safety concerns associated with the air quality.

The system of an example embodiment may include only a single exhaust snorkel 16 for establishing fluid communication with the exhaust system of a respective vehicle. However, the system of another example embodiment includes a plurality of exhaust snorkels, all of which branch from and are in fluid communication with the ventilation system 12. For example, in an instance in which the exhaust system of a vehicle includes two or more exhaust pipes, the system may include a plurality of exhaust snorkels, one of which engages each different exhaust pipe of the vehicle. In addition, for a building 10 having multiple bays 18 for receiving a plurality of vehicles, such as the two bays depicted in Figure 1, a different exhaust snorkel may be positioned at each bay so as to engage the exhaust system of a vehicle within the respective bay. Thus, the system of this example embodiment is configured to capture the exhaust gas from the plurality of vehicles that within the building and are running in order to direct the exhaust gas from each of the vehicles to the ventilation system.

For vehicles that include onboard computer systems and/or memory devices, data may be uploaded from the onboard computer system and/or memory device of the vehicle to an offboard computer system and/or downloaded from the offboard computer system to the onboard computer system and/or memory device of the vehicle while the vehicle is within the building 10. Although data communication between the vehicle and an offboard computer system may be provided for variety of different types of vehicles including, for example, the onboard computer systems of passenger automobiles and trucks, buses, tractors, combines and other types of farm vehicles, autonomous vehicles, such as autonomous trucks, will be described hereinafter for purposes of example, but not of limitation as these autonomous vehicles generally include an onboard computer system that at least partially controls the operation of the vehicle and that collects substantial data during the operation of the vehicle, thereby necessitating data communication between the autonomous vehicle and an offboard computer system while the vehicle is within a bay of a building, such as maintenance depot. In this regard, reference herein to autonomous vehicles includes both fully autonomous vehicles as well as vehicles that are partially autonomous. In order to provide for data communication between the vehicle and the offboard computer system, the vehicle must generally be on and the engine running such that the vehicle produces exhaust gas throughout the data communication session. As described below, the system and method of an example embodiment therefore not only control the data communication between the vehicle and the offboard computer system, but also direct the exhaust gas via an exhaust snorkel 16 from the vehicle to the ventilation system 12 in order to maintain a workable environment within the building.

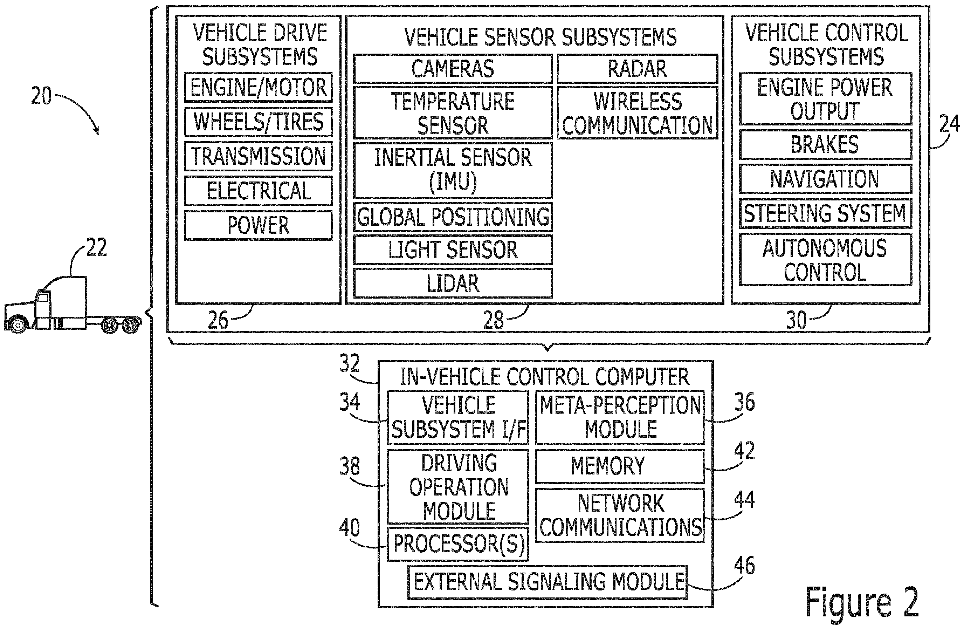

By way of example of an autonomous vehicle, Figure 2 shows a system 20 that includes an autonomous tractor 22. The autonomous tractor includes a plurality of vehicle subsystems 24 and an in-vehicle control computer 32. The plurality of vehicle subsystems includes vehicle drive subsystems 26, vehicle sensor subsystems 28, and vehicle control subsystems 30. An engine or motor, wheels and tires, a transmission, an electrical subsystem, and a power subsystem may be included in the vehicle drive subsystems. The engine of the autonomous truck may be an internal combustion engine, a fuel-cell powered electric engine, a battery powered electric engine, a hybrid engine, or any other type of engine capable of moving the wheels on which the autonomous tractor moves. The autonomous tractor can have multiple motors or actuators to drive the wheels of the vehicle. For example, the vehicle drive subsystems can include two or more electrically driven motors. The transmission of the autonomous vehicle may include a continuous variable transmission or a set number of gears that translate the power created by the engine of the autonomous vehicle into a force that drives the wheels of the autonomous vehicle. The vehicle drive subsystems may include an electrical system that monitors and controls the distribution of electrical current to components within the system, including pumps, fans, and actuators. The power subsystem of the vehicle drive subsystems may include components that regulate the power source of the autonomous vehicle.

Vehicle sensor subsystems 28 can include sensors for general operation of the autonomous truck 22. The sensors for general operation of the autonomous vehicle may include cameras, a temperature sensor, an inertial sensor (IMU), a global positioning system, a light sensor, a LIDAR system, a radar system, and wireless communications.

The vehicle control subsystems 30 may be configured to control operation of the autonomous vehicle, or truck, 22 and its components. Accordingly, the vehicle control subsystems may include various elements such as an engine power output subsystem, a brake unit, a navigation unit, a steering system, and an autonomous control unit. The engine power output may control the operation of the engine, including the torque produced or horsepower provided, as well as provide control of the gear selection of the transmission. The brake unit can include any combination of mechanisms configured to decelerate the autonomous vehicle. The brake unit can use friction to slow the wheels in a standard manner. The brake unit may include an anti-lock brake system (ABS) that can prevent the brakes from locking up when the brakes are applied. The navigation unit may be any system configured to determine a driving path or route for the autonomous vehicle. The navigation unit may additionally be configured to update the driving path dynamically while the autonomous vehicle is in operation. In some embodiments, the navigation unit may be configured to incorporate data from a GPS device and one or more predetermined maps so as to determine the driving path for the autonomous vehicle. The steering system may represent any combination of mechanisms that may be operable to adjust the heading of the autonomous vehicle in an autonomous mode or in a driver-controlled mode.

The autonomous control unit may represent a control system configured to identify, evaluate, and avoid or otherwise negotiate potential obstacles in the environment of the autonomous vehicle 22. In general, the autonomous control unit may be configured to control the autonomous vehicle for operation without a driver or to provide driver assistance in controlling the autonomous vehicle. In some embodiments, the autonomous control unit may be configured to incorporate data from the GPS device, the RADAR, the LiDAR, the cameras, and/or other vehicle subsystems to determine the driving path or trajectory for the autonomous vehicle.

An in-vehicle control computer 32, which may be referred to as a vehicle control unit or VCU, can include, for example, any of: a vehicle subsystem interface 34, a driving operation module 38, one or more processors 40, a meta-perception module 36, a memory 42, an external signaling module 46, or a network communications subsystem 44. This in-vehicle control computer may control many operations of the autonomous truck 22 in response to information available from the various vehicle subsystems 24. The one or more processors 40 execute the operations associated with the meta-perception module 36 that, for example, allow the system to determine confidence in perception data indicating a hazard, determine a confidence level of a regional map, and to analyze the behavior of agents of interest (also referred as targets) surrounding the autonomous vehicle. According to some example embodiments, an agent of interest or a target can be one of: another vehicle, a vehicle following the autonomous vehicle, a vehicle in a vicinity of the autonomous vehicle, a pedestrian, a construction zone, or a vehicle proximate to the autonomous vehicle. For example, the target may be within an intended maneuver zone around the autonomous vehicle. Data from vehicle sensor subsystems 28 may be provided to the meta-perception module so that the course of action may be appropriately determined. Alternatively, or additionally, the meta-perception module may determine the course of action in conjunction with another operational or control module, such as the driving operation module 38 or the external signaling module. According to some example embodiments, the external signaling module can be configured to control signaling behaviors of the autonomous vehicle. According to some example embodiments, the signaling behaviors of the autonomous vehicle can be determined by the external signaling module using, e.g., information provided by one or more sensors of the vehicle sensor subsystems. Example signaling behaviors of the autonomous vehicle are described below.

The memory 42 may contain additional instructions as well, including instructions to transmit data to, receive data from, interact with, or control one or more of the vehicle drive subsystems 26, the vehicle sensor subsystems 28, or the vehicle control subsystems 30. The in-vehicle control computer (VCU) 32 may control the function of the autonomous vehicle 22 based on inputs received from various vehicle subsystems (e.g., the vehicle drive subsystems, the vehicle sensor subsystems, and the vehicle control subsystems). Additionally, the VCU may send information to the vehicle control subsystems to direct the trajectory, velocity, signaling behaviors, and the like, of the autonomous vehicle. The autonomous control vehicle control subsystems may receive a course of action to be taken from one or more modules of the VCU and consequently relay instructions to other subsystems to execute the course of action.

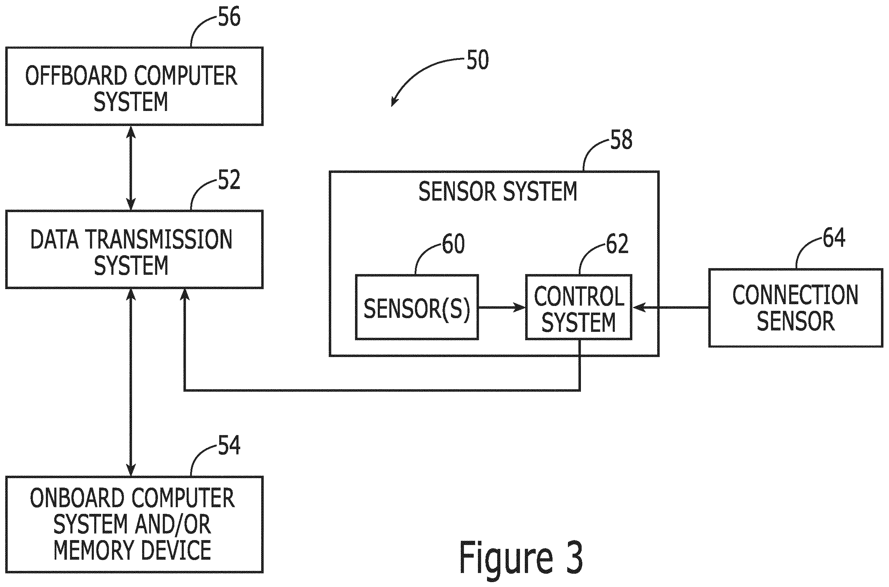

As shown in Figure 3, the system 50 of an example embodiment includes a data transmission system 52 configured to provide for the data communication between the vehicle, such as an onboard computer system and/or memory device 54, and an offboard computer system 56. The offboard computer system may be configured in various manners including as a server or other type of computer configured to store, process and communicate the data with the vehicle. In addition, the onboard computer system and/or memory device may be embodied in various manners including as an in-vehicle control computer system, a control subsystem of the vehicle, such as a control subsystem of the in-vehicle control computer system or the like. For example, the onboard computer system and memory device may be embodied as an in-vehicle control computer 32 and the memory 42 of the autonomous trailer 22 of the embodiment of Figure 2.

The data communication supported by the system 50 and method of an example embodiment may include the upload of data from the vehicle, such as an onboard computer system and/or memory device 54, to the offboard computer system 56. While a variety of data may be uploaded, examples of the data that may be uploaded include data collected by the vehicle during transit, such as data captured by a plurality of sensors carried by the vehicle that provides information regarding the driving and roadway conditions experienced by the vehicle during transit. Additionally, or alternatively, the data communication between the vehicle and the offboard computer system may include the download of data from the offboard computer system to the vehicle, such as an onboard computer system and/or memory device. While a variety of data may be downloaded to the vehicle, examples of the data that may be downloaded include updated map data and/or updated or different software or other operational instructions that may at least partially control subsequent operation of the vehicle.

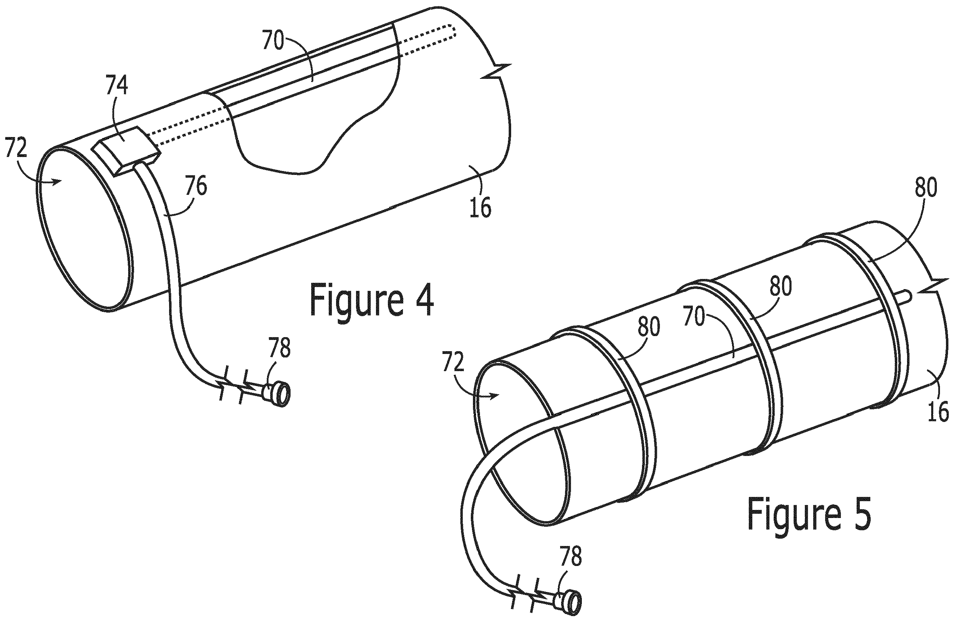

The data transmission system 52 may be configured in various manners. For example, the data transmission system may include one or more wires that are carried by at least a portion of the exhaust snorkel 16 in order to transmit data between the vehicle and the offboard computer system 56. In an example embodiment depicted in Figure 4 in which a portion of the exhaust snorkel is removed for purposes of illustration, the one or more wires 70 extend through at least a portion of the interior 72 of the exhaust snorkel, that is, through the internal passageway defined by the exhaust snorkel, in order to transmit data between the vehicle and the offboard computer system. In one example, the data transmission system includes a cable, such as an ethernet cable, including the one or more wires with the cable extending through at least a portion of the interior of the exhaust snorkel. In one example embodiment depicted in Figure 1, one end 74 of the one or more wires extend out from the end of the exhaust snorkel that engages the exhaust system of the vehicle. Although the one or more wires may be connected to the vehicle, such as the onboard computer system and/or memory device 54 of the vehicle, in various manners, the vehicle of one example embodiment includes a port on an exterior surface of the vehicle that, in turn, is connected to the onboard computer system and/or memory device. In this example embodiment, the one or more wires that extend from the end of the exhaust snorkel may terminate with an electrical connector that is configured to engage the port defined by the vehicle, thereby establishing a connection to the vehicle and, in particular, the onboard computer system and/or memory device of the vehicle.

In an alternative embodiment depicted in Figure 4, the one or more wires 70 that extend through the interior 72 of the exhaust snorkel 16 do not extend through the end of the exhaust snorkel that engages the exhaust system of the vehicle. Instead, the system includes a junction housing 74 carried by the exhaust snorkel. The junction housing of one example embodiment is mounted on an exterior surface of the exhaust snorkel, such as at a location proximate the end of the exhaust snorkel that engages the exhaust system of the vehicle. In this example embodiment, the one or more wires that extend through the interior of the exhaust snorkel extend into and terminate within the junction housing. The system of this example embodiment also includes one or more external wires 76, such as an external cable including one or more wires, that is configured to establish electrical connection with the vehicle, such as the onboard computer system and/or memory device 54. For example, a first end of the one or more external wires may terminate with an electrical connector 78 configured to mate with the port defined by the vehicle in order to establish electrical communication with the onboard computer system and/or memory device, while the opposed second end of the one or more external wires is positioned within the junction housing. In this example embodiment, the second end of the one or more external wires that extend into the junction housing are electrically connected with the one or more wires that extend through the interior of the exhaust snorkel.

The offboard computer system 56 is generally separated from the exhaust snorkel 16 and ventilation system 12 and, as such, the one or more wires 70 that extend through the interior 72 of the exhaust snorkel in accordance with this example embodiment are also configured to exit the exhaust snorkel in order to be connected to the offboard computer system, either directly or indirectly by one or more additional cables. Although the one or more wires may exit the exhaust snorkel at various points along the length of the exhaust snorkel, the one or more wires of an example embodiment exit the exhaust snorkel at an elevated location within the building 10, such as at an elevation above the height of the vehicles that enter the building. As such, the one or more wires are less likely to be damaged by the vehicles entering and exiting the building and are positioned in such a manner as not to restrict or limit the operations of the personnel within the building. In this regard, the exhaust snorkel of one example embodiment may be define an opening through which the one or more wires extend. The opening may be sealed about the one or more wires in order to limit or prevent the escape of exhaust gas therefrom. The one or more wires that extend through the sealed opening may then be connected to the offboard computer system, either directly as shown in Figure 1 or indirectly, in order to support data transmission between the vehicle and the offboard computer system. Alternatively, a junction housing may also be carried by the exhaust snorkel at an elevated location within the building. In this example embodiment, the one or more wires that extend through the interior of the exhaust snorkel may extend into and terminate within the junction housing and one or more external wires, such as an external cable including the one or more external wires, may extend from the offboard computer system to the junction housing in order to be connected to the one or more wires that have extended through the interior of the exhaust snorkel and are terminated within the junction housing.

As the ventilation system 12 will generally draw a vacuum through the exhaust snorkel 16, the one or more wires 70 that extend through the interior 72 of the exhaust snorkel are generally attached to the interior wall of the exhaust snorkel at one or more locations including, for example, at a location near the end of exhaust snorkel that engages the exhaust system of the vehicle. The one or more wires may be attached to the interior wall of the snorkel in various manners including with an adhesive, a tie or a mechanical connector. By attaching the one or more wires to the interior of the exhaust snorkel, the one or more wires will not be drawn through the exhaust snorkel by the ventilation system, but will remain in place and in service.

In another example embodiment depicted in Figure 5, the data transmission system 52 includes one or more wires 70 carried along an exterior surface of at least a portion of the exhaust snorkel in order to transmit data between the vehicle and the offboard computer system. In this regard, the one or more wires may be attached to the exterior surface of at least a portion of the exhaust snorkel in various manners including, for example, by zip ties 80, adhesive or the like. As described above in relation to the one or more wires that extend through the interior 72 of the exhaust snorkel, the one or more wires that are carried by the exterior of the exhaust snorkel may be communicably connected at a first end with a port defined by the vehicle that is in communication with the onboard computer system and/or memory device. In this regard, the first end of the one or more wires may terminate in an electrical connector 78 that is configured to mate with the port defined by the vehicle. The second end of the one or more wires, opposite the first end, may be connected to the offboard computer system, either directly or indirectly, such as via one or more additional cables.

By being carried by the exhaust snorkel 16, such as either within the interior 72 of the exhaust snorkel or along the exterior surface of the exhaust snorkel, the one or more wires 70 are mechanically supported and the placement of the one or more wires is managed in a manner that reduces the likelihood that the one or more wires will interfere with vehicles entering and exiting the building 10 and/or with personnel working within the building. Thus, the one or more wires are more likely to remain operational and not to be damaged by vehicles or personnel and the one or more wires in less likely to impede the operations performed within the building.

In yet another example embodiment, the data transmission system 52 may provide for wireless communication between the vehicle and the offboard computer system 56, such as between an onboard computer system and/or memory device 54 of the vehicle and the offboard computer system.

In an example embodiment, the system 50 also includes a sensor system 58 as shown in Figure 3. The sensor system is configured to control operation of the data transmission system 52 based on a characteristic of the exhaust gas. As also shown in Figure 3, the sensor system of an example embodiment includes one or more sensors 60, such as one or more gas sensors, e.g., carbon monoxide sensors, configured to measure the characteristics of the exhaust gas. The one or more sensors may be located in various positions, but in one example embodiment, are disposed within the exhaust snorkel 16 and attached to an interior wall of the exhaust snorkel so as to measure the characteristics of the exhaust gas within the exhaust snorkel. The sensor system of this example embodiment also includes the control system 62 configured to control operation of the data transmission system based on the characteristics of the exhaust gas as measured by the one or more sensors. The control system may be embodied in the variety of different manners including, for example, as a computer, a controller or the like.

A sensor system 58 in accordance with this example embodiment may be configured to measure and act upon various characteristics of the exhaust gas. In one embodiment, however, the one or more sensors 60 are configured to measure a level of a particular chemical, such as carbon monoxide, in the exhaust gas. The level of the particular chemical may be measured in various manners, such as by measuring the concentration of the particular chemical, e.g., in parts per million (PPM). In this example embodiment, the control system 62 is configured to discontinue the data communication between the vehicle and the offboard computer system 56 in an instance in which the level of the particular chemical, such as carbon monoxide, satisfies a predefined threshold, such as by equaling or exceed a predefined threshold. Thus, in this example embodiment, in an instance in which the level of carbon monoxide in the exhaust gas being directed by the exhaust snorkel from the vehicle to the ventilation system 12 equals or exceeds a predefined threshold, data communication may be discontinued. This discontinuation of the data communication serves as an alert that the exhaust gas is not being removed from the building 10 in the desired manner as a result of the particular chemical, such as carbon monoxide, being at or above a predefined threshold. Based upon this alert as evidenced by the discontinuation of the data communication, the ventilation system and/or the exhaust snorkel 16 may be evaluated to identify if repairs or modifications are required, such as by repairing a leak, removing an obstruction or increasing the vacuum being drawn to insure that the exhaust gas may subsequently be removed from the building in the desired manner as evidenced by the level of the particular chemical, such as carbon monoxide, within the exhaust gas returning to an acceptable level.

The control system 62 may be configured to evaluate the level of a particular chemical in the exhaust gas relative to a predefined threshold in various manners. As described above, the control system may be configured to detect an instance in which the particular chemical exceeds the predefined threshold. Additionally or alternatively, the control system may be configured to detect an instance in which the particular chemical is less than a second predefined threshold. For example, in an instance in which the concentration of the particular chemical is less than the second predefined threshold, the control system may alert the operator and/or discontinue data communications as the relatively low concentration of the particular chemical may be indicative of the exhaust snorkel 16 being leaky and/or a poor connection of the exhaust snorkel to the exhaust system of the vehicle. In this example embodiment, the second predefined threshold may be different, e.g., lower, than the predefined threshold that is referenced by the control system to detect an instance in which the level of particular chemical is too high.

The sensor system 58 of this example embodiment may be part of a larger collection of sensors. For example, the vehicle may include a sensor, such as a carbon monoxide sensor, within the passenger compartment of the vehicle, that is configured to provide an alert if a particular chemical, e.g., carbon monoxide, accumulates to a level above a predetermined threshold within the passenger compartment. Additionally or alternatively, the building 10 may include a sensor that is similarly configured to provide an alert if a particular chemical, e.g., carbon monoxide, accumulates to a level above a predetermined threshold within the building.

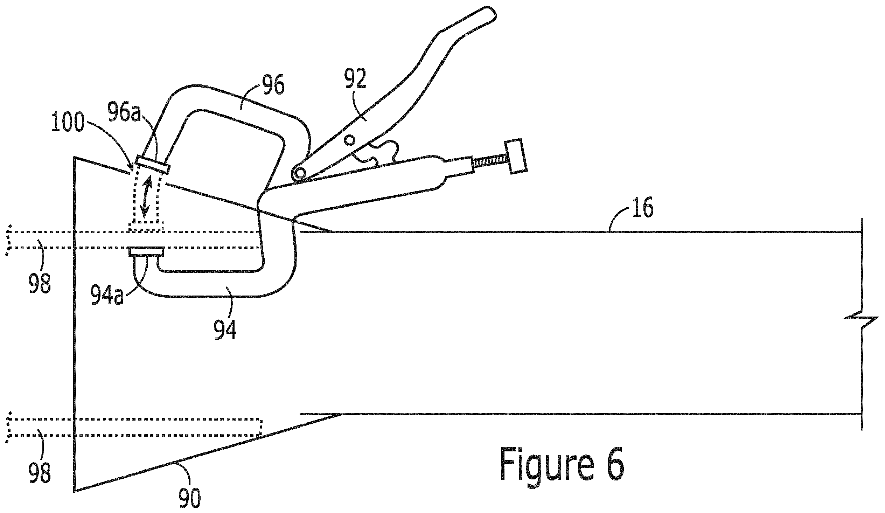

The exhaust snorkel 16 may be configured to engage the exhaust system of the vehicle in various manners. As shown in Figure 6, the exhaust snorkel of an example embodiment includes a tapered end 90, such as a frustoconically shaped end, that is configured to receive exhaust pipes having different sizes, thereby allowing the exhaust snorkel to engage a variety of differently sized exhaust systems of different vehicles. Although not depicted in Figures 1, 4 and 5, the exhaust snorkel of those embodiments may also include a tapered end.

In order to secure the exhaust snorkel 16 to the exhaust system of the vehicle, the system of an example embodiment can also include a connector that is configured to connect the exhaust snorkel to the exhaust system of the vehicle. Although the connector may be configured in various manners, one example of a connector is depicted in Figure 6. As illustrated, the connector includes a clamp 92 having first and second clamp portions 94, 96 that are configured to be moved toward and away from one another to alternately secure an exhaust pipe 98 (depicted in dashed lines) within the end of the exhaust snorkel and to release the exhaust pipe from the exhaust snorkel. In the illustrated embodiment, a first portion of the clamp is positioned within the tapered end of the exhaust snorkel and is fixed in position, while a second portion of the clamp is positioned in the open position shown in solid lines in Figure 6 to be outside of the tapered end of the exhaust snorkel in an instance in which the clamp is in an open position so as to permit the tapered end of the exhaust snorkel to be slid onto an exhaust pipe or slid off of an exhaust pipe of the vehicle. Once the tapered end of the exhaust snorkel has been slid onto an exhaust pipe such that the first portion of the clamp is within the exhaust pipe and the tapered end of the exhaust snorkel is outside of the exhaust pipe, the clamp may be actuated such that the second portion of the clamp moves toward the first portion of the clamp to a clamped position as shown in dotted lines in Figure 6. In this regard, the tapered end of the exhaust snorkel may define an opening 100 through which the mating surface 96a of the second portion of a clamp moves in order to clamp the exhaust pipe between the mating surfaces 94a, 96a of the first and second portions of the clamp, thereby securing the exhaust snorkel to the exhaust pipe. Following completion of the maintenance operations, data communications or other operations performed while the vehicle is within the building 10 and is running, the clamp may be released such that the second portion of the clamp returns to an open position and the exhaust snorkel is permitted to be removed from the exhaust pipe.

In an example embodiment, the system 50 also includes a connection sensor 64 configured to detect the connection of the exhaust snorkel 16 to the exhaust system of the vehicle. Various types of connection sensors may be utilized including an electrical sensor that detects the connection of the exhaust snorkel to the exhaust system of a vehicle by detecting an electrical current that is established between the first and second portions 94, 96 of the clamp 90 during engagement of the exhaust pipe 98 therebetween. Alternatively, the connection sensor may be an optical sensor.

Regardless of the type of connection sensor 64, the control system 62 of this example embodiment is also configured to control the operation of the data transmission system 52 based on the connection of the exhaust snorkel 16 to the exhaust system of the vehicle. Thus, data communication is only allowed by the control system of this example embodiment in an instance in which an exhaust snorkel is connected to the exhaust system of the vehicle and also in which the level of the particular chemical, such as carbon monoxide, is at an acceptable level. If the control system detects that the exhaust snorkel is not properly connected to the exhaust system of the vehicle, the control system is configured to prevent or discontinue data communication between the vehicle and the offboard computer system 56, thereby alerting an operator to check the connection between the exhaust snorkel and the exhaust system of a vehicle to ensure that the exhaust gas output by the vehicle is properly captured by the exhaust snorkel.

In addition to discontinuing data transmission, the control system 62 of an example embodiment may also be configured to provide one or more additional alerts or to trigger one or more additional operations in response to detecting that the level of a particular chemical, such as carbon monoxide, satisfies the predefined threshold. For example, the control system may be configured to cause an audible and/or a visual alert to be generated. Additionally or alternatively, the control system may be configured to interact with the ventilation system 12 to modify, e.g., increase, the performance of the ventilation system, such as by increasing the vacuum drawn by the ventilation system, increasing the speed of the fan of the ventilation system or the like. By conditioning the ongoing data communication between the vehicle and the offboard computer system 56 upon the level of the exhaust gas being within an acceptable range, the system and method of an example embodiment further insure that any accumulation of an exhaust gas is detected and an appropriate response is taken in a timely manner to reduce the concentration of the exhaust gas.

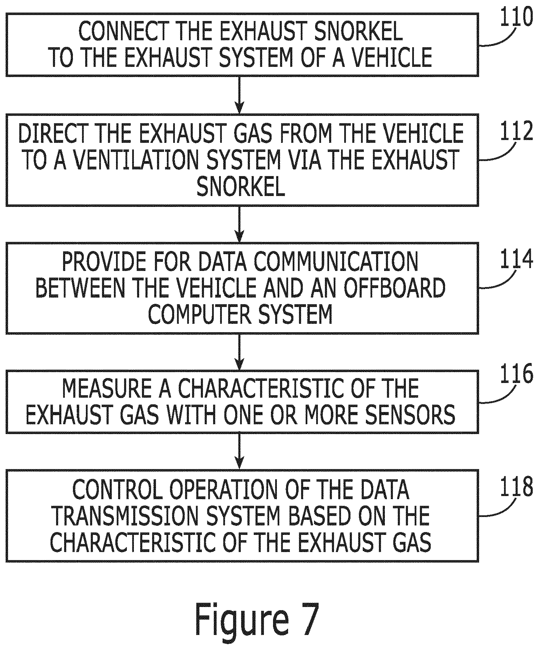

Referring now to Figure 7, a flowchart illustrating the operations performed, such as by the system of an example embodiment, for controlling data communication based on a characteristic of the exhaust gas emitted by a vehicle is provided. As shown in block 110, the method includes connecting the exhaust snorkel 16 to the exhaust system of the vehicle, such as with a connector. The method then directs the exhaust gas from the vehicle to the ventilation system 12 via the exhaust snorkel that is in fluid communication with the exhaust system of the vehicle. See block 112. The method also utilizes a data transmission system 52 to provide for data communication between the vehicle and an offboard computer system 56 as shown in block 114. As described, this data communication may be provided by one or more wires 70 that extend through the interior 72 of the exhaust snorkel or are carried by an exterior surface of the exhaust snorkel. Alternatively, the data communication may be provided by wireless communications between the vehicle and the offboard computer system. As shown in block 118, the method further includes controlling operation of the data transmission system based on a characteristic of the exhaust gas.

As described above, the method of an example embodiment controls the operation of the data transmission system 52 by measuring the characteristics of the exhaust gas with one or more sensors 60 and then controlling the operation of the data transmission system based on the characteristic of the exhaust gases as measured by the one or more sensors. See blocks 116 and 118 of Figure 7. For example, the characteristic that is measured may be the level of a particular chemical, such as carbon monoxide, in the exhaust gas, and the operation of data transmission system may be controlled by discontinuing the data communication between the vehicle and the offboard computer system 56 in an instance in which the level of the particular chemical satisfies a predefined threshold, such as by exceeding the predefined threshold. In an embodiment in which the exhaust snorkel 16 is connected to the exhaust system of the vehicle with a connector, the method of an example embodiment may also include detecting a connection of the exhaust snorkel to the exhaust system of the vehicle and controlling the data transmission system based on the connection of the exhaust snorkel to the exhaust system of the vehicle, such as by discontinuing data communication between the vehicle and the offboard computer system in an instance in which the exhaust snorkel is not connected to the exhaust system of the vehicle.

By conditioning the data communication between the vehicle and the offboard computer system 56 upon a characteristic of the exhaust gas, such as by requiring that the level of a particular chemical within the exhaust gas be maintained within an acceptable range, the system and method of an example embodiment are configured to increase the likelihood that the ventilation system 12 is operating properly in order to reduce the concentration of the exhaust gas to an acceptable level and, if not, that the ventilation system is promptly repaired and/or the operation of the ventilation system is appropriately modified. As such, in an instance in which the data communication between the vehicle and the offboard computer system is discontinued by the system and method of this example embodiment, steps may be taken to improve the performance of the ventilation system and to reduce the level of the particular chemical within the exhaust gas, thereby improving the conditions within the building.

Figure 7 illustrates operations of a system, method and computer program product according to some example embodiments. It will be understood that each operation of the flowchart or diagram, and combinations of operations in the flowchart or diagram, may be implemented by various means, such as hardware and/or a computer program product comprising one or more computer-readable mediums having computer readable program instructions stored thereon. For example, one or more of the procedures described herein, such as in conjunction with Figure 7, may be embodied by computer program instructions of a computer program product. In this regard, the computer program product(s) which embody the procedures described herein may comprise one or more memory devices of the control system 62 storing instructions executable by a processor in the control system. In some example embodiments, the computer program instructions of the computer program product(s) which embody the procedures described above may be stored by memory devices of a plurality of computing devices. As will be appreciated, any such computer program product may be loaded onto a computer or other programmable apparatus (for example, control system 62) to produce a machine, such that the computer program product including the instructions which execute on the computer or other programmable apparatus creates means for implementing the functions specified in the flowchart block(s). Further, the computer program product may comprise one or more computer-readable memories on which the computer program instructions may be stored such that the one or more computer-readable memories can direct a computer or other programmable apparatus to function in a particular manner, such that the computer program product may comprise an article of manufacture which implements the function specified in the flowchart block(s). The computer program instructions of one or more computer program products may also be loaded onto a computer or other programmable apparatus (for example, control system 32 and/or other apparatus) to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

Implementations of the disclosure can be described in view of the following clauses, the features of which can be combined in any reasonable manner.

Clause 1. A system for controlling data communication based on a characteristic of an exhaust gas from a vehicle, the system comprising:
an exhaust snorkel in fluid communication with an exhaust system of the vehicle and configured to direct the exhaust gas from the vehicle to a ventilation system;
a data transmission system configured to provide for data communication between the vehicle and an offboard computer system; and
a sensor system configured to control operation of the data transmission system based on the characteristic of the exhaust gas.

Clause 2. The system according to Claim 1, wherein the sensor system comprises:
one or more sensors configured to measure the characteristic of the exhaust gas; and
a control system configured to control operation of the data transmission system based on the characteristic of the exhaust gas as measured by the one or more sensors.

Clause 3. The system according to Clause 2, wherein the one or more sensors are configured to measure a level of a particular chemical in the exhaust gas, and wherein the control system is configured to discontinue the data communication between the vehicle and the offboard computer system in an instance in which the level of the particular chemical satisfies a predefined threshold.

Clause 4. The system according to Clause 2 or Clause 3, further comprising a connector configured to connect the exhaust snorkel to the exhaust system of the vehicle.

Clause 5. The system according to Clause 4, further comprising a connection sensor configured to detect a connection of the exhaust snorkel to the exhaust system of the vehicle, and wherein the control system is further configured control the operation of the data transmission system based on the connection of the exhaust snorkel to the exhaust system of the vehicle.

Clause 6. The system according to any preceding Clause, wherein the data transmission system comprises one or more wires extending through at least a portion of an interior of the exhaust snorkel in order to transmit data between the vehicle and the offboard computer system.

Clause 7. The system according to any preceding Clause 1, wherein the data transmission system comprises one or more wires carried along an exterior surface of at least a portion of the exhaust snorkel in order to transmit data between the vehicle and the offboard computer system.

Clause 8. The system according to any preceding Clause 1, wherein the data transmission system is configured to provide wireless communication between the vehicle and the offboard computer system.

Clause 9. A method for controlling data communication based on a characteristic of an exhaust gas from a vehicle, the method comprising:
directing the exhaust gas from the vehicle to a ventilation system via an exhaust snorkel that is in fluid communication with an exhaust system of the vehicle;
providing for data communication with a data transmission system between the vehicle and an offboard computer system; and
controlling operation of the data transmission system based on the characteristic of the exhaust gas.

Clause 10. The method according to Clause 9, wherein controlling the operation of the data transmission system comprises:
measuring the characteristic of the exhaust gas with one or more sensors; and
controlling operation of the data transmission system based on the characteristic of the exhaust gas as measured by the one or more sensors.

Clause 11. A method according to Clause 10, wherein measuring the characteristic of the exhaust gas comprises measuring a level of a particular chemical in the exhaust gas, and wherein controlling operation of the data transmission system comprises discontinuing the data communication between the vehicle and the offboard computer system in an instance in which the level of the particular chemical satisfies a predefined threshold.

Clause 12. The method according to any of Clauses 9-11, further comprising connecting the exhaust snorkel to the exhaust system of the vehicle with a connector.

Clause 13. The method according to Clause 12, further comprising detecting a connection of the exhaust snorkel to the exhaust system of the vehicle, and wherein controlling operation of the data transmission system comprises controlling the operation of the data transmission system based on the connection of the exhaust snorkel to the exhaust system of the vehicle.

Clause 14. The method according to any of Clauses 9-13, wherein providing for data communication comprises providing for data communication via one or more wires extending through at least a portion of an interior of the exhaust snorkel in order to transmit data between the vehicle and the offboard computer system.

Clause 15. The method according to any of Clauses 9-14, wherein providing for data communication comprises providing for data communication via one or more wires carried along an exterior surface of at least a portion of the exhaust snorkel in order to transmit data between the vehicle and the offboard computer system.

Clause 16. The method according to any of Clauses 9-15, wherein providing for data communication comprises providing for wireless communication between the vehicle and the offboard computer system.

Clause 17. A computer program product for controlling data communication based on a characteristic of an exhaust gas that is directed from to a ventilation system via an exhaust snorkel that is in fluid communication with an exhaust system of the vehicle, the computer program product comprising at least one computer-readable storage medium having computer-executable program code instructions stored therein, the computer-executable program code instructions comprising program code instructions configured to:
provide for data communication with a data transmission system between the vehicle and an offboard computer system; and
control operation of the data transmission system based on the characteristic of the exhaust gas.

Clause 18. The computer program product according to Clause 17, wherein the program code instructions configured to control the operation of the data transmission system comprise program code instructions configured to:
measure the characteristic of the exhaust gas with one or more sensors; and
control operation of the data transmission system based on the characteristic of the exhaust gas as measured by the one or more sensors.

Clause 19. The computer program product according to Clause 18, wherein the program code instructions configured to measure the characteristic of the exhaust gas comprise program code instructions configured to measure a level of a particular chemical in the exhaust gas, and wherein the program code instructions configured to control operation of the data transmission system comprise program code instructions configured to discontinue the data communication between the vehicle and the offboard computer system in an instance in which the level of the particular chemical satisfies a predefined threshold.

Clause 20. The computer program product according to any of Clauses 17-19, wherein the computer-executable program code instructions further comprise program code instructions configured to detect a connection of the exhaust snorkel to the exhaust system of the vehicle, and wherein the program code instructions configured to control operation of the data transmission system comprise program code instructions configured to control the operation of the data transmission system based on the connection of the exhaust snorkel to the exhaust system of the vehicle.

Clause 21. The computer program product according to any of Clauses 17-20, wherein the program code instructions configured to provide for data communication comprise program code instructions configured to provide for data communication via one or more wires extending through at least a portion of an interior of the exhaust snorkel in order to transmit data between the vehicle and the offboard computer system.

Clause 22. The computer program product according to any of Clauses 17-21, wherein the program code instructions configured to provide for data communication comprise program code instructions configured to provide for data communication via one or more wires carried along an exterior surface of at least a portion of the exhaust snorkel in order to transmit data between the vehicle and the offboard computer system.

Clause 23. The computer program product according to any of Clauses 17-22, wherein the program code instructions configured to provide for data communication comprise program code instructions configured to provide for wireless communication between the vehicle and the offboard computer system.

Clause 24. A system comprising:
an exhaust snorkel in fluid communication with an exhaust system of a vehicle and configured to direct the exhaust gas from the vehicle to a ventilation system; and
one or more wires carried by at least a portion of the exhaust snorkel in order to transmit data between the vehicle and an offboard computer system.

Clause 25. The system according to Clause 24, wherein the one or more wires extend through at least a portion of an interior of the exhaust snorkel in order to transmit data between the vehicle and the offboard computer system.

Clause 26. The system according to Clause 25, further comprising:
a junction housing carried by the exhaust snorkel; and
one or more external wires configured to facilitate transmission of data between the vehicle and the offboard computer system and to be communicably connected at the junction housing to the one or more wires that extend through at least a portion of the interior of the exhaust snorkel.

Clause 27. The system according to any of Clauses 24-26, wherein the one or more wires are carried along an exterior surface of at least a portion of the exhaust snorkel in order to transmit data between the vehicle and the offboard computer system.

Clause 28. The system according to any of Clauses 24-27, further comprising a sensor system configured to control data transmission via the one or more wires based on a characteristic of the exhaust gas.

Clause 29. The system according to Clause 28, wherein the sensor system comprises:
one or more sensors configured to measure the characteristic of the exhaust gas; and
a control system configured to control data transmission via the one or more wires based on the characteristic of the exhaust gas as measured by the one or more sensors.

Clause 30. The system according to Clause 29, wherein the one or more sensors are configured to measure a level of a particular chemical in the exhaust gas, and wherein the control system is configured to discontinue the data transmission between the vehicle and the offboard computer system in an instance in which the level of the particular chemical satisfies a predefined threshold.

Clause 31. The system according to any of Clauses 24-30, further comprising a connector configured to connect the exhaust snorkel to the exhaust system of the vehicle.

Clause 32. The system according to any of Clauses 24-31, further comprising:
a connection sensor configured to detect a connection of the exhaust snorkel to the exhaust system of the vehicle; and
a control system configured to control data transmission via the one or more wires based on the connection of the exhaust snorkel to the exhaust system of the vehicle.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system for controlling data communication based on a characteristic of an exhaust gas from a vehicle, the system comprising:
an exhaust snorkel in fluid communication with an exhaust system of the vehicle and configured to direct the exhaust gas from the vehicle to a ventilation system;
a data transmission system configured to provide for data communication between the vehicle and an offboard computer system; and
a sensor system configured to control operation of the data transmission system based on the characteristic of the exhaust gas.

2. The system according to Claim 1 wherein the sensor system comprises:
one or more sensors configured to measure the characteristic of the exhaust gas; and
a control system configured to control operation of the data transmission system based on the characteristic of the exhaust gas as measured by the one or more sensors.

3. The system according to Claim 2 wherein the one or more sensors are configured to measure a level of a particular chemical in the exhaust gas, and wherein the control system is configured to discontinue the data communication between the vehicle and the offboard computer system in an instance in which the level of the particular chemical satisfies a predefined threshold.

4. The system according to Claim 2 further comprising:
a connector configured to connect the exhaust snorkel to the exhaust system of the vehicle; and
a connection sensor configured to detect a connection of the exhaust snorkel to the exhaust system of the vehicle, and wherein the control system is further configured control the operation of the data transmission system based on the connection of the exhaust snorkel to the exhaust system of the vehicle.

5. The system according to any preceding Claim, wherein the data transmission system comprises one or more wires, wherein the one or more wires are:
extending through at least a portion of an interior of the exhaust snorkel in order to transmit data between the vehicle and the offboard computer system; or
carried along an exterior surface of at least a portion of the exhaust snorkel in order to transmit data between the vehicle and the offboard computer system.

6. A method for controlling data communication based on a characteristic of an exhaust gas from a vehicle, the method comprising:
directing the exhaust gas from the vehicle to a ventilation system via an exhaust snorkel that is in fluid communication with an exhaust system of the vehicle;
providing for data communication with a data transmission system between the vehicle and an offboard computer system; and
controlling operation of the data transmission system based on the characteristic of the exhaust gas.

7. The method according to Claim 6 wherein controlling the operation of the data transmission system comprises:
measuring the characteristic of the exhaust gas with one or more sensors; and
controlling operation of the data transmission system based on the characteristic of the exhaust gas as measured by the one or more sensors.

8. The method according to any of Claims 6 or 7, wherein measuring the characteristic of the exhaust gas comprises measuring a level of a particular chemical in the exhaust gas, and wherein controlling operation of the data transmission system comprises discontinuing the data communication between the vehicle and the offboard computer system in an instance in which the level of the particular chemical satisfies a predefined threshold.

9. The method according to any of Claims 6 to 8 further comprising:
connecting the exhaust snorkel to the exhaust system of the vehicle with a connector; and
detecting a connection of the exhaust snorkel to the exhaust system of the vehicle, and wherein
controlling operation of the data transmission system comprises controlling the operation of the data transmission system based on the connection of the exhaust snorkel to the exhaust system of the vehicle.

10. The method according to any of Claims 6 to 9, wherein providing for data communication comprises providing for data communication via one or more wires extending through at least a portion of an interior of the exhaust snorkel in order to transmit data between the vehicle and the offboard computer system.

11. The method according to any of Claims 6 to 10 wherein providing for data communication comprises providing for data communication via one or more wires carried along an exterior surface of at least a portion of the exhaust snorkel in order to transmit data between the vehicle and the offboard computer system.

12. The method according to any of Claims 6 to 11 wherein providing for data communication comprises providing for wireless communication between the vehicle and the offboard computer system.

13. A system comprising:
an exhaust snorkel in fluid communication with an exhaust system of a vehicle and configured to direct the exhaust gas from the vehicle to a ventilation system; and
one or more wires carried by at least a portion of the exhaust snorkel in order to transmit data between the vehicle and an offboard computer system.

14. The system according to Claim 13 wherein the one or more wires extend through at least a portion of an interior of the exhaust snorkel in order to transmit data between the vehicle and the offboard computer system, the system further comprising:
a junction housing carried by the exhaust snorkel; and
one or more external wires configured to facilitate transmission of data between the vehicle and the offboard computer system and to be communicably connected at the junction housing to the one or more wires that extend through at least a portion of the interior of the exhaust snorkel.

15. The system according to Claim 14 wherein the one or more wires are carried along an exterior surface of at least a portion of the exhaust snorkel in order to transmit data between the vehicle and the offboard computer system.
